# EUROPEAN PATENT APPLICATION

(11) **EP 4 738 533 A1**
(43) Date of publication of application: **06.05.2026**
(21) Application number: 25209860.3
(22) Date of filing: 20.10.2025
(51) Int. Cl.: H01M 10/613, H01M 10/627, H01M 50/204, H01M 50/213, H01M 50/242, H01M 50/244, H01M 50/251

(54) **ENERGY STORAGE RACK AND FRAME STRUCTURE THEREFOR WITH VIBRATIONAL ABSORBER FUNCTION**

(30) Priority: 30.10.2024 LU 508744
(71) Applicant: Skeleton Technologies GmbH, 04420 Markranstädt (DE)
(72) Inventor: TUZIUK, Anton, 76610 Keila (EE); YILDIRIM, Sinan, 10243 Berlin (DE)
(74) Representative: KASTEL Patentanwälte PartG mbB

(57) **Abstract**

In order to improve seismic properties of energy storage racks, the invention proposes a cuboidal frame structure configured for absorbing and/or damping seismic vibration, the frame structure being suitable for an energy storage rack of an energy storage system, the frame structure comprising, a bottom frame that is integrally formed as a single member, the bottom frame having a plurality of column brackets that protrude in a vertical direction upward and are configured for aligning a column in parallel to a vertical direction; a plurality of columns, the columns being mounted to the base frame via the column brackets, each column formed as a hollow profile; and a top frame that is mounted to each column, wherein the columns cooperatively provide a plurality of mounting positions that are configured for receiving and mounting energy storage modules. Passive cooling can be enhanced by disposing supplementary units below the bottom frame.

## Description

The invention relates to a cuboidal frame structure for an energy storage rack of an energy storage system. The invention further relates to an energy storage rack.

In this disclosure the terms "high voltage" (HV), "low voltage" (LV) and "extra low voltage" (ELV) follow the generally accepted definition of the International Electrical Commission according to IEC 61140:2016 "Protection against electric shock - Common aspects for installation and equipment". Thus, the term "high voltage" designates voltages above 1000 V for alternating current (AC) and above 1500 V for direct current (DC), the term "low voltage" designates voltages smaller than or equal to 1000 V for AC and smaller than or equal to 1500 V for DC, and the term "extra low voltage" designates voltages smaller than or equal to 50 V for AC and smaller than or equal to 120 V for DC.

US 2004 / 0 057 211 A1 discloses a rack with liquid cooling system.

CN 117 317 493 A discloses a compact modular container energy storage warehouse. The warehouse can be assembled freely according to need and provides stability for transport. It includes a container warehouse body composed of multiple single warehouses. These single warehouses include a vertically arranged assembly frame. Each assembly frame includes two end caps arranged oppositely up and down, and four assembly rods are provided between the two end caps. The assembly rods include an angle steel extending vertically with the two ends being constructed with connecting seats, and a fixing groove is formed on the end face of the end cover close to the connecting seat. The connecting seat is assembled in the fixed groove, and the connecting seat is connected to the end cover through bolts. Not disclosed is a bottom frame that is integrally formed, incorporating multiple column brackets that protrude in a vertical direction upward and are configured for aligning a column in parallel to a vertical direction. Also not disclosed are the use of hollow profiles and transverse elements for vibrational absorbing, and the use of high-voltage insulators.

CN 117 013 044 B discloses a battery cluster frame as part of an assembly method for an energy storage container. In the battery cluster frame a plurality of vertical beams are arranged in rows between two base bodies. In order to prevent shaking of the battery clusters under the action of external force, two adjacent battery clusters can be connected using connecting plates, which increases the overall weight and enhances stability. Limiting elements ensure that the battery packs can be placed quickly and accurately on the battery cluster frame and can be firmly secured. Furthermore, the space enclosed by the two sides of the battery pack and the first support portion forms an air duct opening, facilitating airflow for heat dissipation. Not disclosed is a bottom frame that is integrally formed, incorporating multiple column brackets that protrude in a vertical direction upward and are configured for aligning a column in parallel to a vertical direction. Also not disclosed are the use of hollow profiles and transverse elements for vibrational absorbing, and the use of high-voltage insulators.

KR 2024 0051017 A discloses an energy storage system including a battery rack, and a battery rack fixing structure for reducing vibrations. The rack case includes a shelf frame, a front frame, a rear frame and a top plate. The influence of vibration can be reduced by minimizing the movement of the battery pack assembled in the rack case. Not disclosed is a bottom frame that is integrally formed, incorporating multiple column brackets that protrude in a vertical direction upward and are configured for aligning a column in parallel to a vertical direction. Also not disclosed is the use of hollow profiles for vibrational absorbing, and the use of high-voltage insulators.EP 3 661 339 A1 discloses a rack adapted for receiving one or more components. The rack includes a backplane, a pair of side panels extending from the backplane and internal support members on each side to receive and mechanically guide an initial alignment of components upon their initial insertion in the rack. A pair of male connectors mounted to the backplane is configured to mate with a corresponding pair of female connectors of each component to mechanically guide a final alignment of each component when the component is further inserted in the rack. Mechanical guidance may also be provided by, or supplemented with, a connection capable of providing liquid cooling to the rack. A system including the rack and the component inserted in the rack is also disclosed.

Such racks, colloquially also non as 19"-racks are a standard component in data centers for mounting, supplying, and cooling servers and other IT equipment. Recently, these types of racks have also received much attention in the field of energy storage, even in high-voltage systems. These racks can be used to build up large strings of fast charging and discharging capacitor banks that can be used in high-voltage DC systems in particular for static synchronous compensation (STATCOM).

Due to the sensitive nature of these systems, certain requirements must be met regarding seismic vibration damping and mitigation as defined in IEEE Recommended Practice for Seismic Design of Substations, IEEE 693-2018.

It is the object of the invention to provide a rack structure that has an improved mitigation of vibrations. The object is achieved by the subject-matter of the independent claims. Preferred embodiments are subject-matter of the dependent claims.

The invention provides a cuboidal frame structure configured for absorbing and/or damping seismic vibration, the frame structure being suitable for an energy storage rack of an energy storage system, the frame structure comprising:
- a bottom frame that is integrally formed as a single member, the bottom frame having a plurality of column brackets that protrude in a vertical direction upward and are configured for aligning a column in parallel to a vertical direction;
- a plurality of columns, the columns being mounted to the base frame via the column brackets, each column formed as a hollow profile;
- a top frame that is mounted to each column,
wherein the columns cooperatively provide a plurality of mounting positions that are configured for receiving and mounting energy storage modules.

The integral formed bottom frame can provide more stability due to higher stiffness. Furthermore, the transfer of vibration is different compared to composite versions that are bolted together. Overall, the bottom frame allows for a better and easier fulfillment of the requirements regarding vibration.

Preferably, the bottom frame is integrally formed by welding a plurality of components or by casting. For easier construction, the bottom frame can be welded from plate or (hollow) bar materials. It is also possible to cast the bottom frame.

Preferably, each column is attached to the bottom frame and/or top frame by a plurality of bolt fasteners. While the bottom frame is a single member that is integrally formed the connection of the columns allows for a little bit of movement, which helps to provide damping at the desired frequencies.

Preferably, the top frame is integrally formed as a single member, preferably by welding a plurality of components or by casting. Preferably, the top frame is also integrally formed. This further improves stiffness and the transfer of vibrational energy such that the desired vibration absorption properties are improved.

Preferably, at least one column bracket has a first leg portion that extends in parallel to a shorter side of the bottom frame and a second leg portion that extends in parallel to a longer side of the bottom frame, preferably substantially orthogonal relative to the first leg portion. Preferably, the first and second leg portions are in contact with and/or fastened to the respective column, preferably the case sheet member. Preferably, the column bracket is formed at a corner portion of the bottom frame. Preferably, at least one column bracket is formed at an edge portion of the bottom frame. Preferably, the column bracket includes a third leg portion that extends parallel to the first leg portion with a space there between. Preferably, two column members that are fastened to the column bracket engage the first and third leg portions as well as each other with the respective case sheet member. The column brackets prevent the columns from a two large deviation from their average position. The column brackets may basically function as a very stiff leaf spring that further improves the vibrational absorption in the frame structure.

Preferably, at least one column includes a case sheet member and a cover sheet member that are engaging and/or fastened to each other to form the column. The column being formed from two sheet member not only allows for easier manufacturing. It also allows to introduce a certain amount of friction within the column, which may further improve vibrational absorber function of the frame.

Preferably, the case sheet member comprises at least three leg portions that are bent in a U-configuration to form sidewalls and a channel bottom of a channel. Preferably, the cover sheet member comprises at least two leg portions that are bent in an L-configuration and the cover sheet member closes the channel to form the hollow profile. Optionally, the case sheet member includes a flange portion that partially protrudes from one side wall inward and parallel to the channel bottom. With this configuration, a stiff column member can be produced that has the desired vibrational absorption.

Preferably, at least one column is integrally formed as a single member. Preferably, the column includes a reinforcement portion that extends parallel to a short side of the column in a cross-sectional view. In an alternative embodiment, the column can be made as a single piece of heavier duty sheet metal. Thus, a similar vibrational absorption can be achieved as the piece column having multiple parts.

Preferably, the frame structure further comprises at least one truss member that is fastened to an end portion of one column and to another end portion or middle portion to form an acute angle with the respective columns. The truss increases rigidity of the whole setup and also allows to disperse certain bending moments during vibration.

Preferably, a plurality of high-voltage isolators is fastened, preferably welded, to the bottom frame. The isolators are typically made of ceramic. Due to the integral configuration of the bottom frame, it is possible to directly mount them in a way that avoids breaking during vibration.

Preferably, the frame structure further comprises at least one installation position that is disposed below, and preferably adjacent to, the bottom frame and is configured for receiving and installing an auxiliary power module that is configured for providing auxiliary power in case of a main power outage and/or a rack controller unit that is configured to control the energy storage modules. The typically more heavy or massive modules are preferably arranged below the bottom frame and between the high-voltage isolators. Thus, the center of mass of the whole construction can be lowered, resulting in better seismic behavior.

The invention provides an energy storage rack for an energy storage system, the energy storage rack comprising a preferred frame structure and a plurality of energy storage modules configured for storing and providing electrical power, wherein the energy storage modules are mounted on the mounting positions provided by the frame structure.

Preferably, the energy storage module include an energy storage that involves supercapacitors.

Preferably, at least one auxiliary power module and/or at least one rack controller unit is installed at the installation position. The auxiliary power modules are able to lower the center of mass in the energy storage rack, thereby improving the seismic properties. Furthermore, these modules and units typically generate the least amount of heat so that the thermal load can be reduced.

Preferably, the energy storage modules are passively cooled, preferably such that a consistent temperature gradient is formed throughout the energy storage rack. For example, passive cooling allows for a lower energy consumption, as no cooling fans need to be powered. The consistent gradient causes the energy storage cells to age more consistently leading to an improved overall lifetime and easier maintenance.

Preferably, each energy storage module includes a plurality of energy storage cells that are arranged arranged in a pattern of hexagonally close-packed equal cylinders or in a rectangular pattern. The patterns allow for a large number of energy storage cells in the energy storage module, while allowing sufficient airflow for cooling between the energy storage cells.

Preferably, each energy storage module includes a heat sink that is disposed at an outward facing side, preferably a front side or a back side, of the energy storage module. With the heat sink being disposed on the outside, the heat is directly transported away from the module thereby further allowing the reduction of thermal load.

In some embodiments the mechanical rack comprises multiple energy storage modules. The modules may comprise supercapacitors or hybrid battery cells.

In some embodiments the vibration profile of the disclosed rack is below 33Hz, and the rack design complies with seismic requirements according to IEEE 693:2018 moderate-level seismic input with 2% damping.

In some embodiments the rack comprises a welded beam base frame.

In some embodiments the rack features diagonal braces at the back and/or on both sides, with preferably none on the front side.

In some embodiments the rack height is kept at the minimum by moving all supplementary equipment to the sides and below the framework.

In some embodiments there are no single-purpose steel components available in the rack - preferably all components work toward strengthening the whole structure.

In some embodiments the rack is installed on a couple of HV insulators, e.g., six HV insulators - preferably one at each corner of the rack and one under each mid-section of the double rack.

In some embodiments the proposed rack includes a passive cooling mechanism that evenly distributes heat, preventing localized overheating and ensuring the reliability and longevity of electronic components within the energy storage system.

In some embodiments the temperature distribution has a consistent gradient throughout the rack.

The energy storage rack's proposed mechanical design, i.e., supercapacitor rack, is seismic hazard proof and complies with the IEEE 693:2018 seismic profile standards. Apart from its earthquake-proof design, the rack may also comprise natural cooling and preferably has no enclosure.

The proposed rack design is most suitable in high-voltage DC (HVDC) systems, especially in static synchronous compensators (STATCOM) or enhanced-STATCOM (ESTACOM) systems.

Typically one rack unit comprises a double rack containing with space for 20 modules, master (module) controllers, bypass subassembly, auxiliary ("aux.") supply, and rack controller equipment.

The rack unit framework dimensions are more or less standardized as 1200 mm x 600 mm x 2100 mm (WxDxH, excluding the HV insulators). Energy storage system (ESS) modules are preferably designed to be installed in a rack with 19-inch slider spacing, which is also the major constraint that generally determines the overall rack dimensions. This is the wide spread form factor that is used, thus the disclosure focuses on this implementation. However, it should be noted that other dimensionioning is generally possible though unusual.

The rack framework is preferably designed to fit 20 ESS modules. The modules can be installed on slidable brackets and fixed with screws at the front face. The framework may include two major subassemblies - a welded base frame and a sheet metal framework (in particular the columns). Preferably, the rack is open with no walls. Thus, the rack is typically capped at an IP00 rating, meaning a level of protection where there is no special protection against ingress of solids or liquids.

The rack features no additional or optional empty space that is not filled with the required equipment. In other words, nearly the whole rack volume is equipped with components without wasted space. To be able to comply with the seismic profile, the height of the rack is kept preferably at the absolute minimum and all supplementary equipment is preferably installed on the sides and below the rack, e.g., between the insulators.

Keeping the rack height to a minimum also allows to solve potential logistics issues like transportation limitations and maintainability (e.g., less equipment to reach with a mobile platform). The rack is installed on HV insulators - preferably one at each corner of the rack and two under the mid-section of the double rack. The auxiliary power system and rack controller are preferably installed underneath the rack base frame between the HV insulators. This was found to be the optimal location in seismic simulations.

The master controller may perform the voltage balancing of the cells within the rack. It can be installed either at the very top or bottom slot. The master controller may be at the very top. In this double-track system, the auxiliary supply units are preferably conceptually placed below the rack for reasons related to seismic design and stability. The grounding point, which is generally to be used during maintenance, is located at the center of the base frame.

Seismic design considerations involve enhancing stability, e.g., by placing the auxiliary units below. This lowers the system center of gravity, thereby improving stability and resistance to seismic activity.

The E-STATCOM system is designed to withstand the moderate profile of the IEEE 693:2018 seismic profile. To ensure compliance with the standard, a series of preliminary seismic-specific simulations were performed during the concept phase which resulted in the embodiments disclosed herein.

Two simulation targets were set in accordance with the standard tests. A first target is that the lowest eigenfrequency in the horizontal direction is above 33 Hz. In case there is an eigenfrequency in the vertical direction below 33 Hz, the embodiment is still acceptable. The eigenfrequency matches the requirements of IEEE 693-2018, otherwise, the vibration load may get amplified, which may cause damage to the system and ultimately lead to destructive resonance events.

A second target is that no failure is seen at the rack regarding the provided vibration profile. The vibration profile exists below 33 Hz. Any resonance below 33 Hz will generally amplify the seismic input. The simulation results show that the rack design complies with seismic requirements according to IEEE 693:2018 at moderate-level seismic input with 2% damping. The measures describe dherein generally shift the resonance frequency. No damage is observed at sine-sweep fatigue calculation.

The simulation resulted in some features that helpful in the context of seismic design. These features include a welded beam base frame, diagonal braces at the back and sides of the framework, HV insulators at the corners and optionally the mid sections, rack height kept at a minimum especially by moving all supplementary equipment to the sides and below the framework, and/or no single-purpose steel components - all components (cooperatively) work toward strengthening of the whole structure.

In addition, thermal management is considered in this disclosure. A thermal simulation was conducted to evaluate the effectiveness of the current cooling concept for the E-STATCOM double rack design. Efficient thermal management is important for ensuring the reliability and longevity of electronic components within the ESS. For the simulation, a simplified rack model can be used to reduce the simulation time while having sufficient model accuracy.

Analysis conditions include a a simplified double rack model for simulation, a module count of 20 ESS modules, a master controller and switchgear enclosures included (on top) for worst-case air movement restriction, a load of 31 A rms on the ESS modules only, a module balancer temperature of 85 °C, a module power loss of about 15 W to 18 W (cells and busbars only, balancer excluded), module at end of life (EoL) conditions, equivalent series resistance ESR of 200 % of rated 1 s ESR, total power loss of the rack about 300 W (cells and busbars only, balancers excluded), ambient temperature of 26 °C, cooling type natural convection, temperature criteria involves maximum cell temperature, and rack IP class of IP00.

Under these and similar conditions, the temperature distribution within the double rack is typically a consistent gradient, with the highest temperatures occurring near the top of the rack due to natural convection.

The maximum cell temperature observed was around 48 °C, which is within the acceptable operational limits for the components. This suggests that the passive cooling is sufficient to manage the heat generated by the ESS modules. The temperature distribution is comparatively uniform across the modules, without significant hotspots. Thus, with the passive cooling approach heat can be evenly distributed, while localized overheating is prevented.

A detailed analysis of individual modules, particularly the third module from the top, shows a higher temperature at the center compared to the edges. This core-to-edge gradient is typical in such setups and can be managed within safe limits.

The lifetime simulations conducted after thermal simulations demonstrate that the passive convective cooling configuration for the E-STATCOM double-rack is effective. The studies focused on assessing the temperature rise within the modules and the thermal resistance (Rₜₕ).

Key findings from the thermal study are discussed for temperature rise, thermal resistance, and lifetime expectation. The maximum cell temperature observed during the simulations was around 48 °C. This temperature is well within the acceptable operational limits for the components. The thermal simulations revealed the highest thermal resistance (Rₜₕ) value of 1.34 K/W. This value is indicative of efficient heat dissipation, with the system effectively managing the thermal load generated by the modules. The Rₜₕ value used in lifetime simulations is chosen according to the highest module temperature value. Based on the temperature rise and the calculated thermal resistance, the expected lifetime of the system components is expected to be more than 20 years under ambient temperature conditions at 26 °C.

In the double-rack design, precise temperature monitoring can be necessary for ensuring the optimal performance and longevity of the modules. The placement of temperature sensors is strategically designed to capture accurate thermal data from critical points within the system. The sensors are placed on the printed circuit board (PCB) rather than directly on the cells themselves. Each cell is preferably numbered with a so called cell index, and temperature sensors are positioned at key locations to monitor the thermal state. Specifically, bottom-side temperature sensors and top-side temperature sensors are used preferentially. There may also be a current measurement (CM) sensor for measureing the current of the PCB busbar.

Given the effective thermal management in this configuration, no additional cooling is required, as the passive cooling method, utilizing natural convection, is sufficient to maintain safe operating temperatures. As a result the longevity and availability of the electronic components can be ensured.

Furthermore, the lack of a closed housing or casing contributes to cost-effectiveness, improved cooling efficiency, reduced complexity, and may achieve a lifetime of 20 years of the system. Additional costs, added weight, operational complexities, and potential environmental impacts can also be reduced or avoided compared to forced cooling or liquid cooling solutions.

The lack of liquid cooling further decreases failure rates as a potential failure point can be eliminated. Overall, this approach helps to ensure a reliable, efficient, and sustainable thermal management solution for E-STATCOM double-rack systems.

Embodiments of the invention are described in more detail with reference to the accompanying schematic drawings that are listed below
- Fig. 1: depicts an embodiment of an energy storage rack;
- Fig. 2: depicts an embodiment of a bottom frame;
- Fig. 3: depicts another embodiment of a bottom frame;
- Fig. 4: depicts a detail of the columns attached to the bottom frame;
- Fig. 5: depicts an embodiment of a top frame;
- Fig. 6 to Fig. 8: depict variants of the column;
- Fig. 9: depicts another embodiment of an energy storage rack;
- Fig. 10: depicts a spectral acceleration graph of the energy storage rack;
- Fig. 11A: depicts a lateral view of thermal simulation results;
- Fig. 11B: depicts a front view of the thermal simulation results;
- Fig. 12: depicts a horizontal cross-section of the thermal simulation results;
- Fig. 13: depicts a table of the thermal simulation results; and
- Fig. 14: illustrates the thermal sensor positioning for an energy storage module.

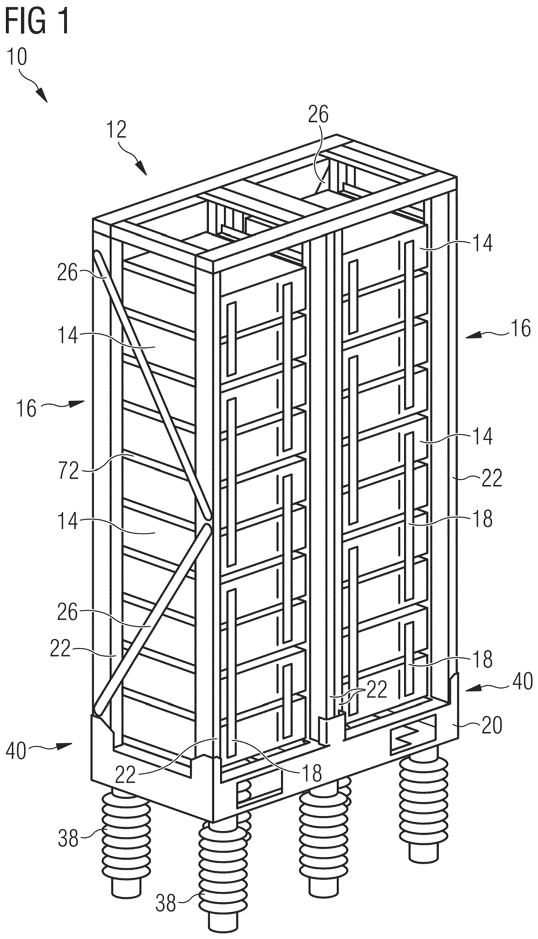

Referring to Fig. 1 an energy storage rack 10 is depicted. The energy storage rack 10 comprises a frame structure 12. The frame structure 12 supports a plurality of energy storage modules 14 that are mounted to the frame structure in predetermined mounting positions 16. The energy storage modules 14 are electrically and mechanically connected by a plurality of busbars 18.

The frame structure 12 comprises a bottom frame 20. The bottom frame 20 supports a plurality of vertical columns 22. The columns 22 are held together at the top by a top frame 24. The frame structure 12 may further include a plurality of trusses 26 that are mounted between different columns 22.

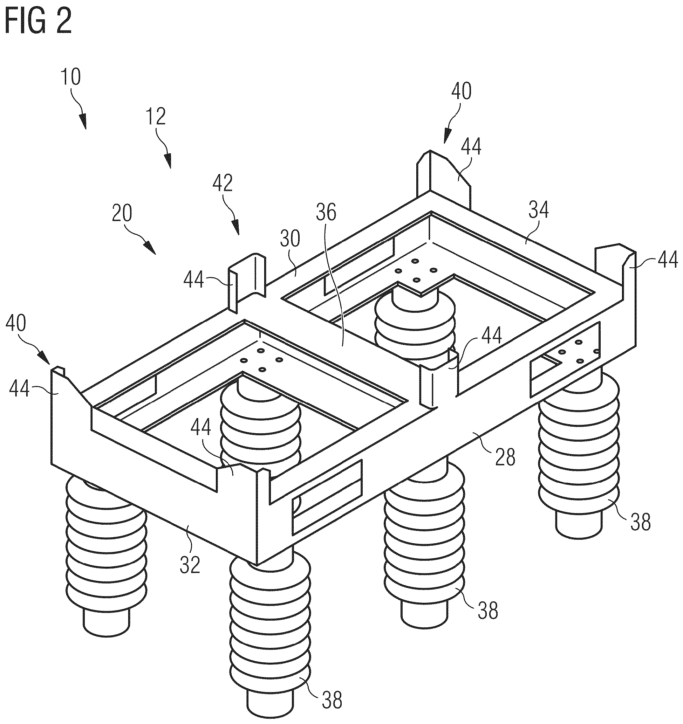

Referring to Fig. 2, the bottom frame 20 is depicted in more detail. The bottom frame 20 is integrally formed as a single member. The bottom frame 20 has a general rectangular shape. The bottom frame 20 is welded together from different parts of sheet metal. The sheet metal has preferably a thickness of at least 3 mm, preferably about 5 mm.

The bottom frame 20 has long front/back portions 28, 30 and short side portions 32, 34. Furthermore, the bottom frame 20 includes a crossbeam 36 that is parallel to the side portions 32, 34 and formed roughly in the middle.

The long front/back portions 28, 30 and the short side portions 32, 34 have a cross-section that is roughly C-shaped. These portions 28-34 may include openings for airflow.

The crossbeam 36 may have a C-shaped cross-section, although other cross-sections are possible, such as similar to an I-beam, where preferably the upper side is narrower than the bottom side.

The bottom frame 20 includes a plurality of high-voltage (HV) isolators 38. The HV isolators 38 are mounted to the bottom frame 20 via fasteners and are preferably arranged at corner portions 40 and intermediate portions 42, as shown in Fig. 2.

The bottom frame 20 includes a plurality of column brackets 44 that protrude upward. The column brackets 44 are formed on the corner and intermediate portions 40, 42. The column brackets 44 at the corner portions 40 generally have an L-shape, whereas the column brackets 44 at the intermediate portions 42 generally have a U-shape.

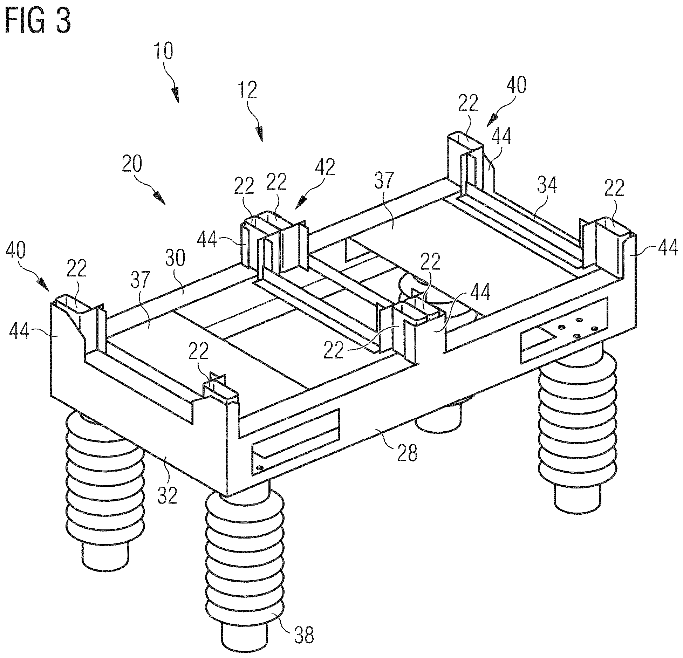

Referring to Fig. 3 another embodiment of the bottom frame 20 is depicted. Here the bottom frame has no crossbeam, but instead includes stabilization plates 37. The stabilization plates 37 can be welded to the front/back portions 28, 30, preferably the short legs of the C-shape. The bottom frame 20 includes four HV isolators 38.

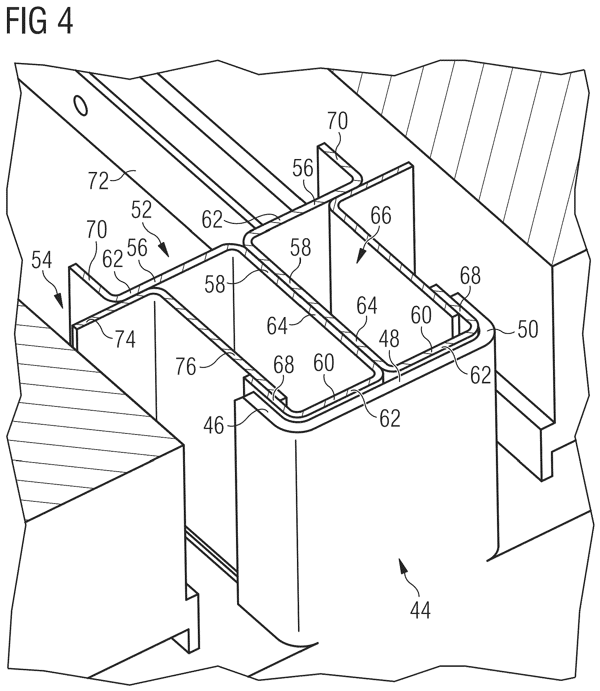

Referring to Fig. 4, the bottom frame 20 is depicted in more detail. The column bracket 22 includes a first leg portion 46, a second leg portion 48, and a third leg portion 50. The first and third leg portions 46, 50 are parallel to each other and spaced apart by the second leg portion 48. The second leg portion 48 is orthogonal to the first and third leg portions 46, 50.

The column 22 includes a case sheet member 52 and a cover sheet member 54. The sheet members 52, 54 are made of bent metal sheets with a thickness of preferably about 3 mm.

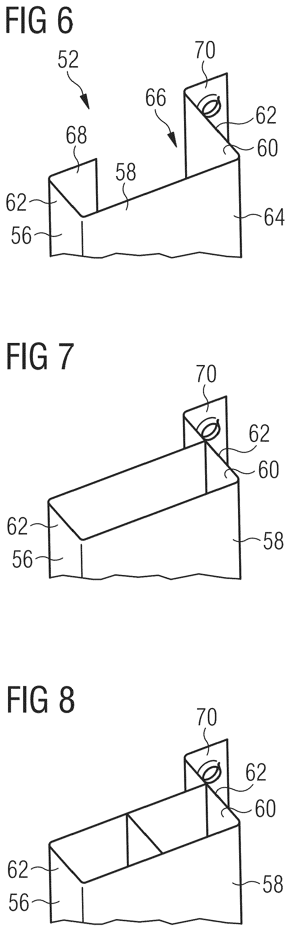

Referring to Fig. 4 and Fig. 6, the case sheet member 52 generally has a U-shaped cross-section formed of the leg portions 56-60. The three leg portions 56-60 form sidewalls 62 and a channel bottom 64 of a channel 66 that is open to one side.

The case sheet member 52 may have a first flange 68 that protrudes from one of the sidewalls 62 towards the other sidewall thereby partially covering the opening. The first flange 68 allows fastening of the case sheet member 52 to the cover sheet member 54 and/or to the column bracket 22.

The case sheet member 52 may include a second flange 70 that protrudes from the other of the sidewalls 62 outwards and away from the channel 66. The second flange 70 allows fastening of the case sheet member 52 to support rails 72 that support the energy storage modules 14.

Referring back to Fig. 4, the cover sheet member 54 has two orthogonal leg portions 74, 76. The leg portion 74 is large enough to cover the channel 66 so that the case sheet member 52 and the cover sheet member 54 form a hollow profile. The leg portion 74 can be fastened to the first flange 68 and/or to the column bracket 22.

As shown in Fig. 4, two neighboring columns 20 may be fastened to a single column bracket 22 such that their respective case sheet members 52 are in contact with each other, preferably with their respective channel bottoms 64.

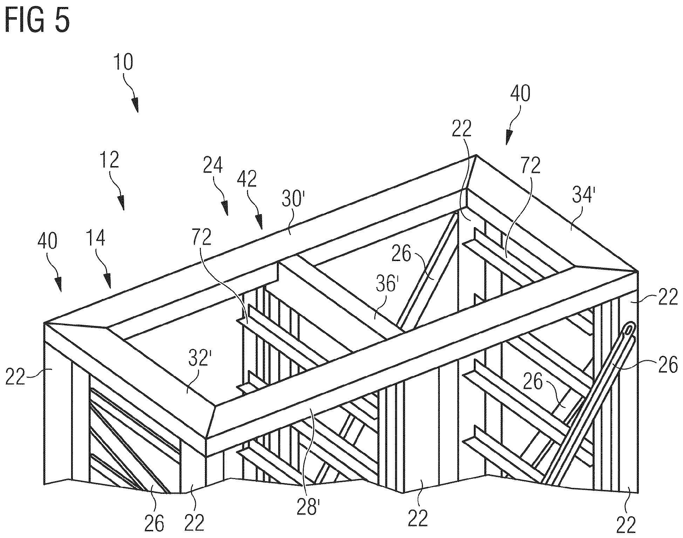

Referring to Fig. 5, the top frame 24 is matched to the bottom frame 20 such that the columns 20 are vertical in the installed stated. Thus, the configuration of the top frame 24 is not described again for sake of brevity. It is noted that the same reference signs are used as with the bottom frame, however, with an added apostrophe. The top frame 24 can be made of separate metal profiles or bent sheet metal that are bolted together, or the top frame 24 can be integrally formed by welding bent sheet metal or metal profiles.

Referring to Fig. 7, the column 20 can also be integrally formed as a single member hollow profile with a rectangular cross-section.

Referring to Fig. 8, the column 20 may include a reinforcement that is arranged within the hollow profile.

Applicant has found through FEM-simulations that the described frame structure 12 meets the vibrational requirements set forth in the abovementioned standard.

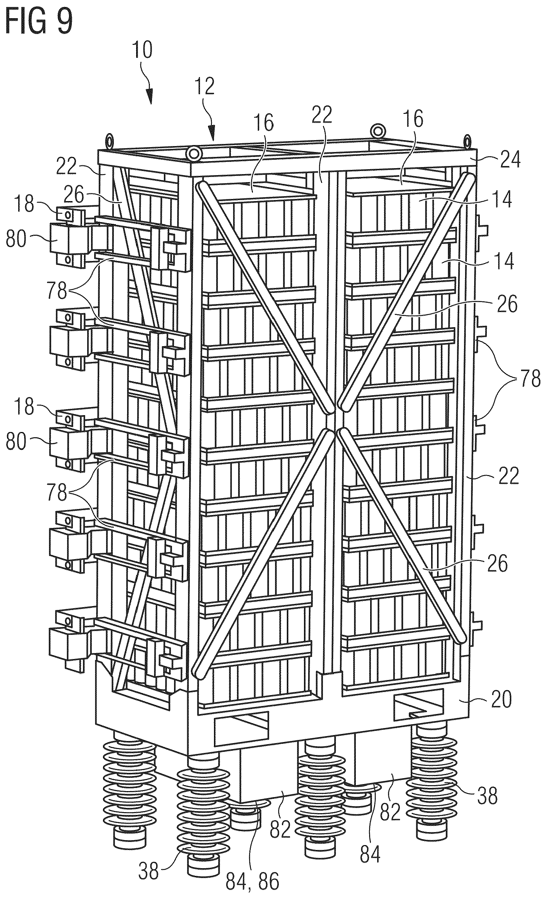

Referring to Fig. 9 another embodiment of an energy storage rack 10 is described insofar as it differs from the previously described embodiment. The energy storage rack 10 comprises a plurality of structural braces 78. The structural braces 78 are disposed on a side 80 of the energy storage rack 10. Each structural brace 78 spans at least two columns 22 (front and back). The structural braces 78 are made of bent sheet metal.

The energy storage rack 10 comprises a plurality of busbars 18 that are disposed on the front and electrically connect the energy storage modules 14. The busbars 18 are preferably supported by pylons 80 that are attached to a single column 22.

The energy storage rack 10 may further comprise at least one installation position 82. The installation positions 82 are disposed below the bottom frame 20. The installation positions 82 may be formed by sheet metal. Each installation position 82 may an auxiliary power module 84 and/or a rack controller unit 86. The auxiliary power module 84 is configured to supply the controllers (module controller units and rack controller unit 86) of the energy storage rack 10 in case of a main power outage. The rack controller unit 86 is configured to control the module control units in order to form a managable system.

The installation position 82 are disposed witin the volume below the bottom frame 20 and in between the HV isolators 38.

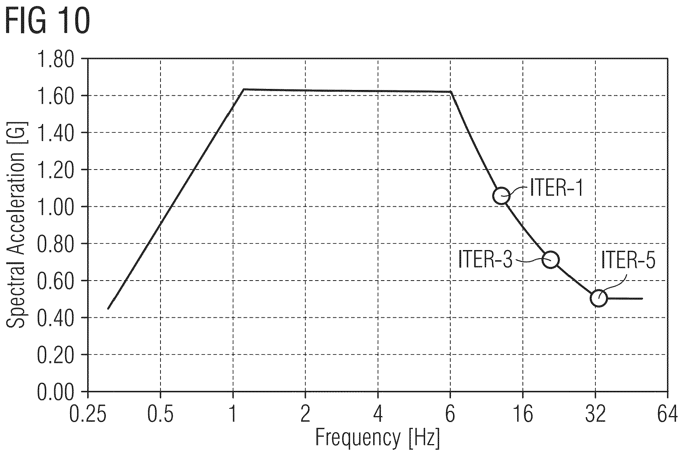

Referring to Fig. 10, a spectral acceleration graph is illustrated. The x-axis is the frequency and the y-axis denotes the acceleration in multiples of the earth acceleration of about 9.8 m/s². The line shows the frequency sweep using sine waves and their amplitude. The data point ITER-1 depicts the result for an energy storage rack without integral bottom frame and 20 modules as a comparison. This is non-compliant with the seismic standard. Data point ITER-3 shows the energy storage rack 10 with an integral bottom frame 20 and four HV isolators 38 with significant improvement in seismic behavior. Data point ITER-5 shows the energy storage rack 10 with integral bottom frame 20 and six HV isolators 38 with still further improvement in seismic behavior.

In some embodiments the mechanical rack comprises multiple energy storage modules. The modules can be comprised of supercapacitor or hybrid battery cells. In some embodiments the vibration profile of the proposed rack is below 33 Hz. Thus, the rack design complies with seismic requirements according to IEEE 693:2018 moderate-level seismic input with 2% damping. In some embodiments the rack comprises a welded beam base frame. In some embodiments the rack features diagonal supports at the back and on both sides, with none on the front side. In some embodiments the rack height is kept at the minimum by moving all supplementary equipment to the sides and/or below the framework. In some embodiments there are no single-purpose steel components; ideally all components work toward strengthening the whole structure. In some embodiments the rack is installed on multiple, e.g. six, HV insulators - one at each corner of the rack and two under the mid-section of the double rack. In some embodiments the proposed rack includes a passive cooling mechanism that evenly distributes heat, preventing localized overheating and ensuring the reliability and longevity of electronic components within the electric storage system (ESS). In some embodiments the temperature distribution has a consistent gradient throughout the rack. The energy storage rack is seismic hazard proof and generally complies with the IEEE 693:2018 seismic profile standards. Apart from its earthquake-proof design, the rack may also comprise natural cooling and preferably has no enclosure.

The rack is able to prevent seismic hazard and is most suitable in HVDC systems, especially in static synchronous compensator (STATCOM) or enhanced-STATCOM (ESTACOM) systems. One rack unit preferably is composed as a double rack containing multiple, e.g. 10 to 20, energy storage modules, master (module) controllers, a bypass subassembly, an auxiliary ("aux.") supply, and/or rack controller equipment.

The rack unit framework dimensions are about 1200 x 600 x 2100 (W x D x H each in mm, excl. insulators). ESS modules are designed to be installed in the rack with typical 19-inch slider spacing. This is generally the major constraint that determines the overall rack dimensions. The framework is preferably designed to fit 20 ESS modules. The modules can be installed on slidable brackets and are generally fixed with screws at the front face. The framework includes two major subassemblies - a welded base frame and a sheet metal framework. It is preferably an open rack with no walls. The rack is generally capped at an IP00 protective rating, i.e. a level of protection where there is no special protection against solids or liquids.

The rack concept is highly compact and generally features no additional or optional empty space that is not filled with the required equipment. In order to better comply with the seismic profile, the height of the rack is ideally kept to a minimum. Additionally or alternatively all supplementary equipment is installed on the sides and/or below the rack. Keeping the rack height to a minimum also allows to improve potential logistics issues like transportation limitations and maintainability (e.g. less equipment to reach with a mobile platform). The rack is preferably installed on six HV insulators - one at each corner of the rack and two under the mid-section of the double rack. The auxiliary power system and rack controller are preferably installed underneath the rack base frame between the HV insulators. Applicant found in their FEM studies that this was the best location in view of seismic considerations.

The master controller generally performs the voltage balancing of the cells within the rack. It can be installed either at the very top or bottom of the rack, preferably in the slot mounting positions. The master controller is preferably at the very top. In the double-track system, the auxiliary supply units are preferably placed below the rack due to seismic design and stability considerations. The grounding point, which is to be used during maintenance, is preferably located at the center of the base frame.

The seismic design considerations involve enhanced stability preferably, by placing the auxiliary units below the system center of gravity. This helps to improve stability and resistance to seismic activity.

In general, the E-STATCOM system is designed to withstand the moderate profile of the IEEE 693:2018 seismic profile.

In order to design the rack to comply with the standard, a series of preliminary seismic-specific simulations were performed. Two simulation targets were set in accordance with the standard tests. The first target is that the lowest eigenfrequency in the horizontal direction is above 33 Hz. In case there is an eigenfrequency in the vertical direction below 33 Hz, the design is still acceptable. The eigenfrequency should match the requirements of IEEE 693-2018, otherwise, the vibration load can get amplified, leading to potentially destructive resonance events.

The second target is that no failure must be seen at the rack regarding the provided vibration profile. The vibration profile exists below 33 Hz. Any resonance below 33 Hz will generally amplify the seismic input. The simulation results show that the rack design complies with seismic requirements according to IEEE 693:2018 moderate-level seismic input with 2% damping. No damage is observed with the sine-sweep fatigue calculation.

The best-performing design iteration of the rack framework involves at least one of the following features:
- an integral, e.g. welded, beam base frame;
- diagonal struts at the back and/or sides of the framework;
- at least four, preferably six HV insulators;
- rack height is kept at a minimum by moving most or all supplementary equipment to the sides and/or below the framework;
- all components work toward strengthening of the whole structure;

Furthermore, a thermal management design was found by simulations.

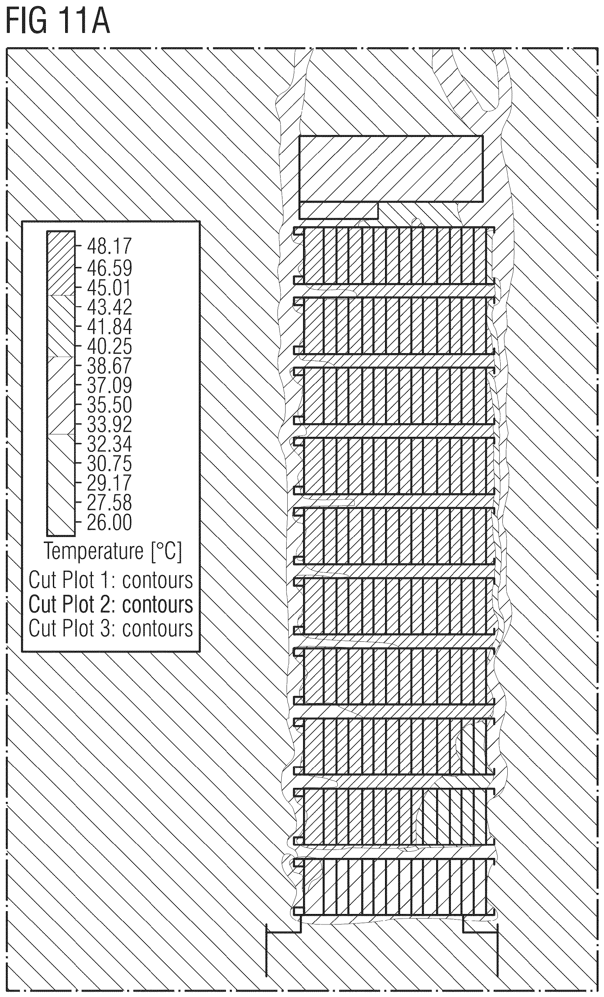

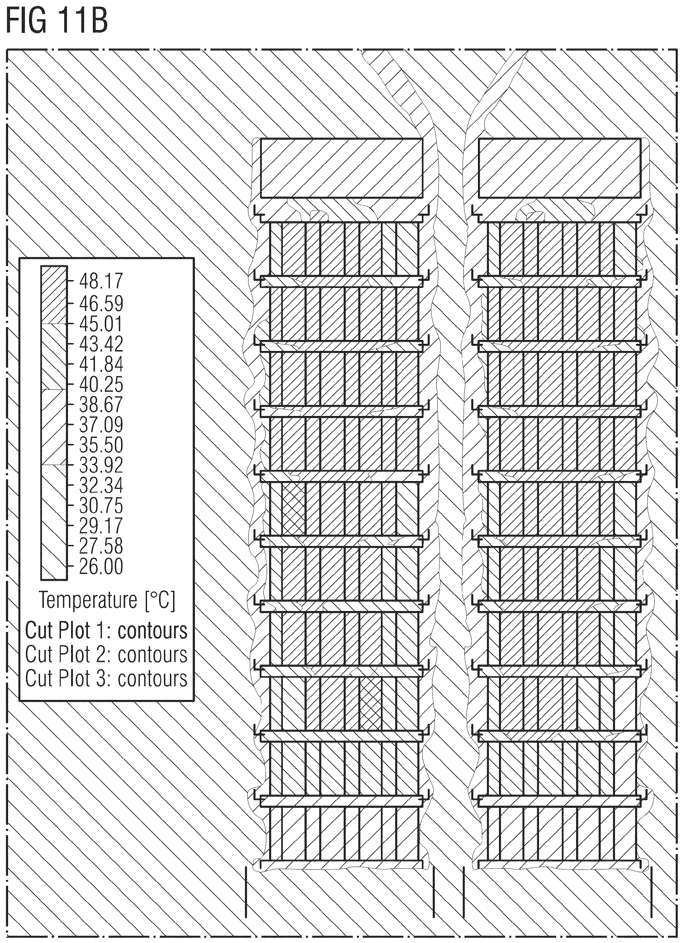

The results are shown in Fig. 11 to Fig. 13. The primary goal of the thermal simulation is to evaluate the effectiveness of the cooling concept for the E-STATCOM (double) rack design. Efficient thermal management is crucial for ensuring the reliability and longevity of electronic components within the ESS. The simulation showed that passive cooling methods are sufficient. For the simulation, the simplified rack model was used to reduce the simulation time.

The objective of the simulations is the investigation of the feasibility of the targeted passive cooling concept. Analysis conditions are as follows:
- Simplified double rack model for simulation.
- Module count: 20 x ESS modules.
- Master Controller and Switchgear enclosures included (on top) for worst-case air movement restriction.
- Load: ESS modules only - 31 A rms.
- Module balancer temperature: 85°C
- Module power loss: 16.49 W (Cells and busbars only, balancer excluded)
- Module at EoL (End of life) conditions, ESR (200% of rated 1s ESR) (Equivalent series resistance)
- Total power loss of the rack: 15,4 x 20 = 308 W (Cells and busbars only, balancers excluded)
- Ambient temperature: 26°C.
- Cooling type: Natural convection
- Temperature criteria: Maximum cell temperature is used
- Rack IP class: IP00

As shown in Fig. 11A and Fig. 11B, the thermal simulation results indicate the temperature distribution within the E-STATCOM double-rack design under the specified conditions. The temperature distribution within the double rack reveals a consistent gradient, with the highest temperatures occurring near the top of the rack due to natural convection.

The maximum cell temperature observed was around 48°C, which is within the acceptable operational limits for the components. This shows that the passive cooling concept is sufficient to manage the heat generated by the ESS modules. The simulated temperatures show relatively uniform distribution across the modules, with no significant hotspots. This indicates that the passive cooling mechanism distributes heat evenly, preventing localized overheating. It should be noted, that the ESS module electronics PCB at the front has an initially set temperature of 85°C.

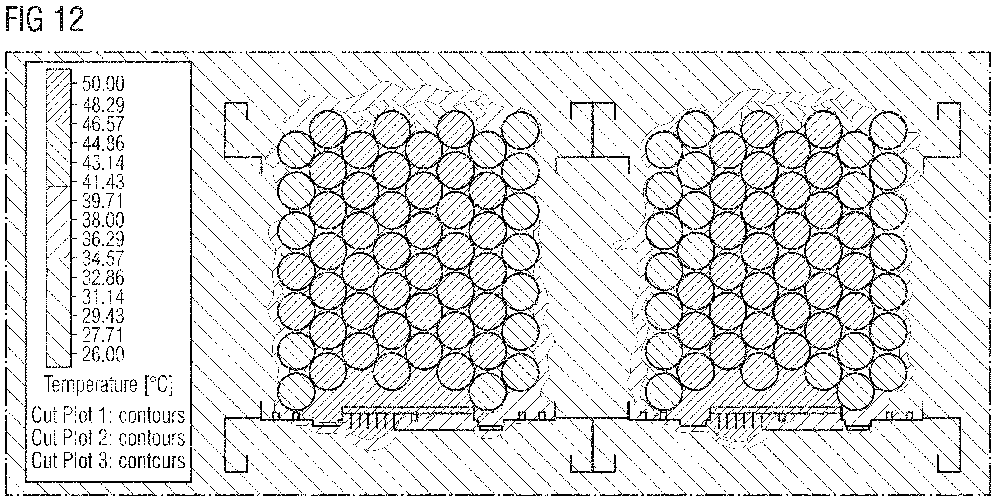

Fig. 12 depicts a detailed analysis of individual modules, particularly the third module from the top, and shows a higher temperature at the center compared to the edges. This core-to-edge gradient is typical this setup, but can be managed within safe limits.

The lifetime simulations conducted after thermal simulations demonstrate that the current cooling configuration for the E-STATCOM double-rack design is effective. The study is generally focused on assessing the temperature rise within the modules and the thermal resistance (Rₜₕ).

Key findings from the thermal study are discussed for temperature rise, thermal resistance, and lifetime expectation. The maximum cell temperature observed during the simulations was around 48 °C. This temperature is well within the acceptable operational limits for the components. The thermal simulations revealed the highest thermal resistance (Rₜₕ) value of 1.34 K/W. This value is indicative of efficient heat dissipation, with the system effectively managing the thermal load generated by the modules. The Rₜₕ value used in lifetime simulations is chosen according to the highest module temperature value. Based on the temperature rise and the calculated thermal resistance, the expected lifetime of the system components is about 20 years with ambient temperature at 26 °C.

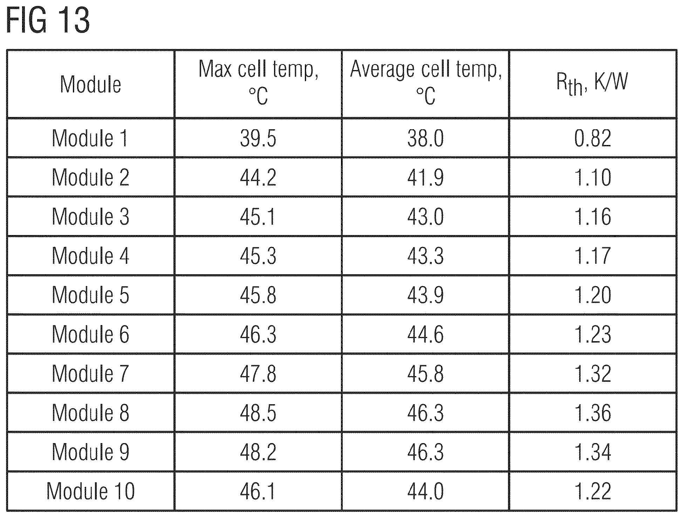

Fig. 13 shows temperature values and Rₜₕ values from the thermal simulation. Module 8 has the highest max temperature value recorded and taken as a basis for lifetime simulations. Numbering is from the lowest module to the highest in the rack. (Module 1 - Bottom-most module in the rack; Module 10 - Top-most module in the rack)

In the double-rack design, precise temperature monitoring is helps ensuring the optimal performance and longevity of the modules. The placement of temperature sensors is strategically designed to capture accurate thermal data from critical points within the system. The sensors are placed on the printed circuit board (PCB) rather than directly on the monitored cells themselves.

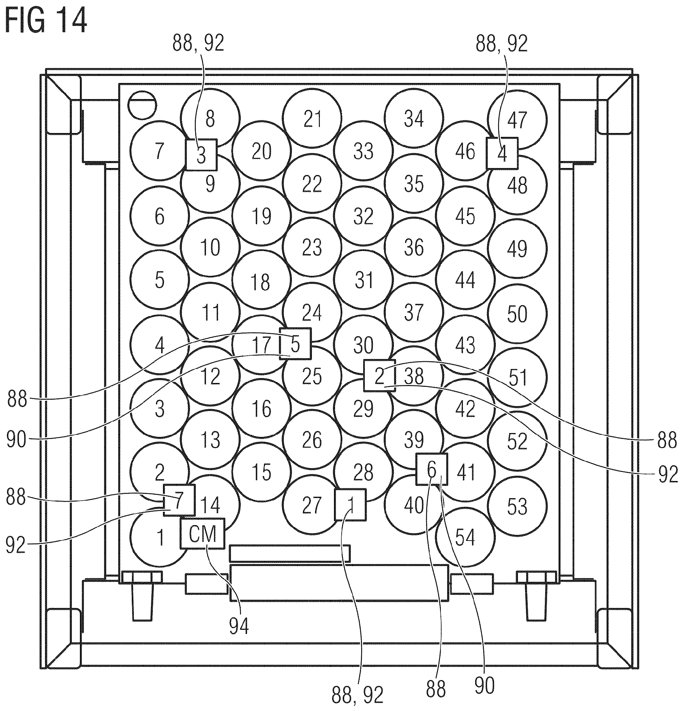

As depicted in Fig. 14, each cell is numbered from 1 to 54 (not to be confused with the reference numerals), and temperature sensors 88 are positioned at key locations to monitor the thermal state. Specifically, bottom-side temperature sensors 90 and top-side temperature sensors 92 are used. The CM sensor 94 is for the current measurement of the PCB busbar.

Given the effective thermal management demonstrated by the simulations, the current configuration of the double-track design does not require additional cooling. The passive cooling method, utilizing natural convection, is considered sufficient to maintain safe operating temperatures, thereby ensuring the longevity and availability of the electronic components.

The decision to use IP00 class enclosures is further justified by their cost-effectiveness, optimal cooling efficiency, reduced complexity, and achieved a lifetime of 20 years. Additional costs, added weight, operational complexities, and potential environmental impacts are avoided by using natural convection cooling instead of forced or liquid cooling solutions. This can further reduce the failure rates as the aforementioned cooling solutions have additional failure modes that can be avoided. This approach allows for a reliable, efficient, and sustainable thermal management solution rack systems.

### List of reference signs:

- 10: energy storage rack
- 12: frame structure
- 14: energy storage modules
- 16: mounting position
- 18: busbar
- 20: bottom frame
- 22: columns
- 24: top frame
- 26: truss
- 28: front portion (bottom frame)
- 28': front portion (top frame)
- 30: back portion (bottom frame)
- 30': back portion (top frame)
- 32: side portion (bottom frame)
- 32': side portion (top frame)
- 34: side portion (bottom frame)
- 34': side portion (top frame)
- 36: crossbeam (bottom frame)
- 36': crossbeam (top frame)
- 37: stabilization plates
- 38: high-voltage (HV) isolators
- 40: corner portion
- 42: intermediate portion
- 44: column bracket
- 46: first leg portion
- 48: second leg portion
- 50: third leg portion
- 52: case sheet member
- 54: cover sheet member
- 56: leg portion
- 58: leg portions
- 60: leg portion
- 62: sidewall
- 64: channel bottom
- 66: channel
- 68: first flange
- 70: second flange
- 72: support rail
- 74: leg portion
- 76: leg portion
- 78: structural brace
- 80: pylon
- 82: installation position
- 84: auxiliary power module
- 86: rack controller unit
- 88: temperature sensor
- 90: bottom-side temperature sensor
- 92: top-side temperature sensors
- 94: CM sensor

## Claims

1. An energy storage rack (10) with vibrational absorber function, **characterized in that** a cuboidal frame structure (12) is configured to absorb and/or damp seismic vibrations, the frame structure (12) comprising:
- a bottom frame (20) that is integrally formed as a single member, the bottom frame (20) having a plurality of column brackets (44) that protrude in a vertical direction upward and are configured for aligning a column (22) in parallel to a vertical direction;
- a plurality of columns (22), the columns (22) being mounted to the bottom frame (20) via the column brackets (44), each column (22) formed as a hollow profile;
- a top frame (24) that is mounted to each column (22),
wherein the columns (22) cooperatively provide a plurality of mounting positions (16) that are configured for receiving and mounting energy storage modules (14).

2. The frame structure (12) of any of the preceding claims, wherein each column (22) is attached to the bottom frame (20) and/or top frame (24) by a plurality of bolt fasteners.

3. The frame structure (12) of any of the preceding claims, wherein the top frame (24) is integrally formed as a single member, preferably by welding a plurality of components or by casting.

4. The frame structure (12) of any of the preceding claims, at least one column bracket (44) has a first leg portion (46) that extends in parallel to a shorter side of the bottom frame (20) and a second leg portion (48) that extends in parallel to a longer side of the bottom frame (48), preferably substantially orthogonal relative to the first leg portion (46), wherein the first and second leg portions (46, 48) are in contact with and/or fastened to the respective column (22), preferably the case sheet member (52).

5. The frame structure (12) of any of the claims 4, wherein at least one column bracket (44) is formed at an edge portion of the bottom frame (20), and the column bracket (44) includes a third leg portion (50) that extends parallel to the first leg portion (46) with a space there between, wherein two column members (22) that are fastened to the column bracket (44) engage the first and third leg portions (46, 48) as well as each other with the respective case sheet member (52).

6. The frame structure (12) of any of the preceding claims, wherein at least one column (22) includes a case sheet member (52) and a cover sheet member (54) that are engaging and/or fastened to each other to form the column (22).

7. The frame structure (12) of claim 6, wherein the case sheet member (52) comprises at least three leg portions (56, 58, 60) that are bent in a U-configuration to form sidewalls (62) and a channel bottom (64) of a channel (66), wherein the cover sheet member (54) comprises at least two leg portions (74, 76) that are bent in an L-configuration and the cover sheet member (54) closes the channel (66) to form the hollow profile, wherein optionally the case sheet member (52) includes a flange portion (68) that partially protrudes from one side wall inward and parallel to the channel bottom (64).

8. The frame structure (12) of any of the preceding claims, wherein at least one column (22) is integrally formed as a single member and optionally includes a reinforcement portion that extends parallel to a short side of the column (22) in a cross-sectional view.

9. The frame structure (12) of any of the preceding claims, wherein a plurality of high-voltage isolators (38) is fastened, preferably welded, to the bottom frame (20).

10. The frame structure (12) of any of the preceding claims, further comprising at least one installation position (82) that is disposed below, and preferably adjacent to, the bottom frame (20) and is configured for receiving and installing an auxiliary power module (84) that is configured for providing auxiliary power in case of a main power outage and/or a rack controller unit (86) that is configured to control the energy storage modules (14).

11. An energy storage rack (10) for an energy storage system, the energy storage rack (10) comprising a frame structure (12) of any of the preceding claims and a plurality of energy storage modules (14) configured for storing and providing electrical power, wherein the energy storage modules (14) are mounted on the mounting positions (16) provided by the frame structure (12).

12. The energy storage rack (10) of claim 11, wherein the energy storage module (14) includes an energy storage that involves supercapacitors.

13. The energy storage rack (10) of claim 11 or 12, wherein the frame structure (12) is of claim 10, and at least one auxiliary power module (84) and/or at least one rack controller unit (86) is installed at the installation position (82).

14. The energy storage rack (10) of any of the claims 11 to 13, wherein the energy storage modules (14) are passively cooled, preferably such that a consistent temperature gradient is formed throughout the energy storage rack (10).

15. The energy storage rack (10) of claim 14, wherein each energy storage module (14) includes:
- a plurality of energy storage cells that are arranged in a pattern of hexagonally close-packed equal cylinders or in a rectangular pattern.
- a heat sink that is disposed at an outward facing side, preferably a front side or a back side, of the energy storage module (14).
